Europäisches Patentamt

European Patent Office

Office européen des brevets

(19)

(11) Veröffentlichungsnummer: **0 344 356**
**A1**

(12) ## EUROPÄISCHE PATENTANMELDUNG

(21) Anmeldenummer: 88112748.4

(22) Anmeldetag: 05.08.88

(51) Int. Cl.4: **B29C 65/74 , B29C 65/18 , B65B 9/02 , B65B 51/30 , //B29L7:00**

(30) Priorität: 01.06.88 DE 3818664

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: Urban GmbH & Co. Maschinenbau KG
Dornierstrasse 5
D-8940 Memmingen(DE)

(72) Erfinder: Girnus, Ernst
Gossmannshofen 97 1/2
D-8914 Lachen(DE)

(74) Vertreter: Pfister, Helmut, Dipl.-Ing.
Buxacher Strasse 9
D-8940 Memmingen/Bayern(DE)

(54) **Vorrichtung zum Verschweissen von Kunststoffolien.**

(57) Beim Trennschweißen von Folien (1,2) unter hoher Spannung besteht die Gefahr, daß die Trennschweißung mißlingt. Es wird vorgeschlagen, zwischen den Klemmbacken (4,5) eine Schweißunterlage (9) elastisch nachgiebig zu lagern. Die Schweißunterlage (9) bewirkt beim Schweißvorgang zunächst eine Vorwölbung der Folien (1,2), die erst unter der Wirkung des Schweißstabes (8) beseitigt wird. Dabei ergibt sich eine praktisch völlige Entlastung der Folien (1,2).

Fig.2

# Vorrichtung zum Verschweißen von Kunststoffolien

Die Erfindung betrifft eine Vorrichtung zum Verschweißen, insbesondere zum Trennschweißen von Folien, die unter Spannung einen oder mehrere Gegenstände umschlingen, mit zwei gegeneinander beweglichen Klemmenpaaren, zwischen denen ein beheizter Schweißstab und eine Schweißunterlage beweglich angeordnet sind, derart, daß die Folien zwischen den Klemmenpaaren nach dem Klemmvorgang und vor dem Schweißvorgang gegen den Schweißstab vorgewölbt sind, und der Schweißvorgang nach Zurückbewegung der Schweißunterlage bei im wesentlichen entlasteten Folien erfolgt.

Eine Vorrichtung der vorstehend angegebenen Gattung ist durch die DE-OS 19 03 515 bekanntgeworden. Mittels dieser Vorrichtung werden Gegenstände von einer Folie umhüllt, die gegen einen Folienvorhang geschoben werden, wobei die beiden Folienteile des Vorhanges hinter den Gegenständen miteinander durch Schweißung, und zwar durch Trennschweißung, verbunden werden. Auf diese Weise werden die Gegenstände mit einer Schlinge aus einer Kunststoffolie umhüllt. Das geschaffene Gebinde wird abgetrennt, und gleichzeitig wird ein neuer Folienvorhang gebildet für den nachfolgenden Umhüllungsvorgang.

Da es erwünscht ist, die Gegenstände möglichst straff zu umhüllen, muß beim Schweißen bzw. Trennschweißen auf diese Folienspannung Rücksicht genommen werden. Dies geschieht bei der erwähnten Vorrichtung dadurch, daß die beiden miteinander zu verschweißenden Folien durch zwei Klemmbackenpaare festgeklemmt werden, wobei zwischen den Klemmbackenpaaren der Schweißstab und die Schweißunterlage angeordnet sind. Dabei ist zusätzlich zu den Klemmbackenpaaren sowohl die Schweißunterlage als auch der Schweißstab angetrieben, und zwar derart, daß der Schweißstab zunächst vorgeschoben wird, so daß nach dem Klemmen die miteinander zu verschweißenden Folien gegen den Schweißstab vorgewölbt sind. Nach dem Klemmvorgang wird die Schweißunterlage zurückgezogen, wobei die Folien entspannt werden. Anschließend erfolgt das Schweißen.

In der DE-OS 23 65 953 ist eine Banderoliermaschine beschrieben, die eine besondere Straffungseinrichtung aufweist, um die Folie nach dem Umschlingen aber vor dem Verschweißen zu straffen. Bei dieser Bauweise werden die miteinander zu verschweißenden und abzutrennenden Folien nur durch zwei Klemmenpaare gehalten. Obwohl die Folie hierbei straff gespannt ist, wird auf eine besondere Einrichtung zur Entlastung der Folie beim Schweißen verzichtet. Die Bauweise wird hierdurch beträchtlich einfacher.

Es ist gefunden worden, daß auch bei Banderoliermaschinen mit besonderen Straffungseinrichtungen in der Regel Einrichtungen zur Entlastung der Folie beim Schweißvorgang entbehrlich sind, da eine Schweißung auch durch einfache Mittel gelingt. Extremfälle treten jedoch auf, wenn die Folien sehr hohe Spannungen besitzen. Solche hohe Spannungen ergeben sich vor allem, wenn beispielsweise im gleichen Arbeitsgang in einer Banderoliermaschine mehrere Gebinde gleichzeitig durch Umschlingung mit einer Folie geschaffen werden. Diese Gebinde sind nach dem Umschlingen und dem Abtrennen von der Folie untereinander zu teilen, d. h. es sind zwischen den Gebinden Trennschweißungen vorzunehmen. Dabei besitzen die durch die Folien umhüllten Gegenstände beispielsweise zylindrische Gestalt, und zwischen den einzelnen zylindrischen Gegenständen ist zwar durch den Banderolierungsvorgang die Folie schon eingezogen, die beiden zu verschweißenden Folien liegen jedoch noch nicht aufeinander.

Wenn an dieser Stelle eine Trennschweißung vorgenommen werden soll, werden durch die hierfür notwendigen Klemmen erhebliche Spannungen in den Folien erzeugt, da die Folien soweit gedehnt werden müssen, daß die zu verschweißenden Folien aufeinander liegen. Die Folienmenge ist dabei schon vorgegeben, weil der Umhüllungsvorgang schon abgeschlossen ist.

Wegen der hier auftretenden extremen Folienspannung gelingen die Trennschweißungen mit einfachen Mitteln nicht mehr. Aber auch die Vorrichtung der eingangs erwähnten DE-OS 19 03 515 ist nicht oder nur schwierig zu verwenden. Das Problem liegt dabei darin, daß diese bekannte Vorrichtung einen komplizierten Aufbau besitzt und eine Mehrzahl von Antriebsmitteln benötigt, um nicht nur die Klemmen und den Schweißstab zu bewegen, sondern auch um die erforderliche Bewegung der Schweißunterlage herbeizuführen. Beim Problem der Unterteilung von gemeinsam umhüllten Gegenständen in kleinere Gebinde tritt zudem das Problem auf, daß die Lage der Vorrichtung in der Maschine veränderbar sein muß. Die Breite der einzelnen Gebinde ist öfter abzuändern, und demgemäß müssen die Trennschweißeinrichtungen seitlich zur Förderrichtung versetzt werden.

Der Erfindung liegt somit die Aufgabe zugrunde, eine Vorrichtung zu schaffen, mit der es möglich ist, beim Verschweißen, insbesondere beim Trennschweißen von Folien, auch dann brauchbare Ergebnisse zu erzielen, wenn die Folien eine erhebliche Spannung aufweisen, und wobei insbesondere die Vorrichtung einfach ausgebildet und daher geringe Abmessungen aufweisen soll, so daß es möglich ist, die Vorrichtung auch bei beengten Platzverhältnissen anzuwenden.

Zur Lösung dieser Aufgabe geht die Erfindung aus von einer Vorrichtung der eingangs angegebenen Gattung und schlägt vor, daß die Schweißunterlage unter der Wirkung einer elastischen Vorschubkraft steht, die groß genug ist, um die Folien vorzuwölben, und wobei der Schweißstab zu Beginn des Schweißvorgangs die Schweißunterlage zurückdrückt.

Es wurde gefunden, daß es genügt, wenn die Schweißunterlage unter der Wirkung einer elastischen Vorschubkraft steht, die leicht in der gewünschten Weise bemessen werden kann. Auf diese Weise kann ein besonderer Antrieb der Schweißunterlage eingespart werden. Die Schweißunterlage ist lediglich zwischen den entsprechenden Klemmen anzuordnen und sorgt dafür, daß beim Klemmvorgang der Folienabschnitt zwischen den Klemmen dachartig vorgewölbt wird. Nach dem Klemmvorgang stehen zwar die Folien immer noch unter erheblicher Spannung. Wenn nun aber der Schweißstab vorgeschoben wird, drückt dieser gegen die Folien und damit gegen die Schweißunterlage, die einen entsprechenden Betrag zurückweichen kann. Ein besonderer Antrieb für die Schweißunterlage ist hierbei entbehrlich.

Das Zurückweichen geschieht dabei so schnell, daß die Schweißung noch nicht die Folien so geschwächt hat, daß die Folien auseinandergerissen werden. Der Schweißvorgang erfolgt erst dann, wenn die Folien schon entlastet sind. Der Schweißvorgang, insbesondere der Trennschweißvorgang, läuft dann in üblicher Weise ab. Nach angemessener Abkühlzeit werden die Klemmen gelöst, und die Spannung der Folienteile außerhalb der Klemmen wirkt sich dann auch auf dem Bereich der Schweißung aus. Die Schweißung wird dann aber nicht mehr zerstört, da sie schon hinreichend abgekühlt ist.

Insgesamt erreicht die Erfindung eine sehr einfache Bauweise. Es sind nur die Klemmen und der Schweißstab anzutreiben. Es können Folien auch bei extremen Spannungen verarbeitet werden, und insbesondere ist es möglich, die erfindungsgemäße Anordnung auch bei sehr beengten Platzverhältnissen anzuwenden. Insbesondere gelingt die Unterbringung, beispielsweise von mehreren derartigen Vorrichtungen, zur Unterteilung einer gemeinsam gebildeten Folienschlinge in mehrere einzelne Gebinde.

Günstig ist es, wenn die beiden Klemmen auf der einen Folienseite untereinander verbunden und gemeinsam angetrieben sind, und daß diese beiden Klemmen zwischen sich eine Führung und eine Halterung für die Schweißunterlage besitzen. Dabei ist insbesondere vorgesehen, daß auch die beiden Klemmen auf der Seite des Schweißstabes untereinander verbunden und gemeinsam angetrieben sind.

Insbesondere schlägt die Erfindung vor, daß die beiden Klemmen auf der anderen Folienseite untereinander verbunden und gemeinsam angetrieben sind, und daß die beiden Klemmen zwischen sich eine Führung für den Schweißstab aufweisen. Dabei ist es günstig, wenn die Klemmen und der Schweißstab einen gemein samen Antrieb aufweisen und die Klemmen gegen die Wirkung einer Feder oder dergleichen zurückdrückbar sind.

Diese Bauweise vereinfacht wesentlich die erfindungsgemäße Vorrichtung. Auf der Ober- und auf der Unterseite der Folien ist nur je eine Antriebseinrichtung vorgesehen, deren Bewegungen von einer gemeinsamen Einrichtung aus gesteuert sind. Beim Schweißvorgang wird die Schweißunterlage mit den zugehörigen Klemmen gegen die Folien bewegt und gleichzeitig oder unmittelbar anschließend bewegt sich auch der Schweißstab mit den zugehörigen Klemmen gegen die Folien. Durch die elastischen Mittel wird erreicht, daß zunächst die Folien von der Schweißunterlage dachartig vorgespannt werden, daß anschließend das Festklemmen der beiden Folien erfolgt, und daß schließlich der Schweißstab die Schweißunterlage zurückdrückt und den Schweißvorgang durchführt.

Günstig ist es, wenn die elastisch nachgiebige Schweißunterlage in der Ausnehmung einer beweglichen Halterung befestigt ist. Auch diese Ausbildung dient der Vereinfachung und Verkleinerung der baulichen Abmessungen.

Es wurde nun gefunden, daß sich die erfindungsgemäße Vorrichtung insbesondere dann mit Vorteil verwenden läßt, wenn es darum geht, die voneinander getrennten Einzelgebinde soweit zu unterteilen, daß diese Gebinde noch teilweise aneinander hängen. Eine solche teilweise Trennschweißung nach Art einer Perforierung hat den Vorteil, daß der Abtransport der gefertigten Gebinde wesentlich vereinfacht wird. Um dies zu erreichen, schlägt die Erfindung vor, daß der beheizte Schweißstab eine Vielzahl von Einkerbungen aufweist, die beim Trennschweißen Unterbrechungsstellen bilden, an denen die zu trennenden Teile aneinander hängen. Die Bildung zusammenhängender Gebilde in der vorerwähnten Weise gelingt bei der Erfindung insbesondere deshalb, weil die Verschweißung der Kunststoffolien im entlasteten Zustand erfolgt, die Gefahr eines Aufreißens der Schweißung praktisch beseitigt ist.

In der Zeichnung ist ein Ausführungsbeispiel der Erfindung schematisch dargestellt. Es zeigen:

Fig. 1 eine Schnittdarstellung durch die erfindungsgemäße Vorrichtung, vor Beginn des Trennschweißvorganges,

Fig. 2 eine Schnittdarstellung zu Beginn des Trennschweißvorganges,

Fig. 3 eine Schnittdarstellung während des Trennschweißvorganges,

Fig. 4 eine Ansicht eines Schweißstabes in einem anderen Maßstab,

Fig. 5 eine vergrößerte Darstellung der Einzelheit V der Fig. 4 und

Fig. 6 eine Schnittdarstellung durch die Darstellung der Fig. 5 entsprechend der Schnittlinie VI-VI.

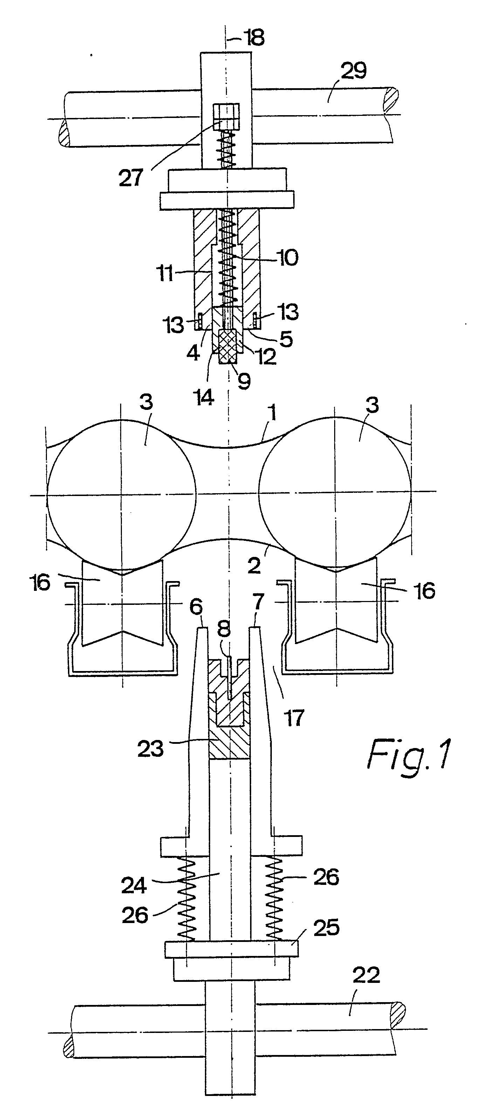

In der Darstellung der Fig. 1, 2 und 3 ist die erfindungsgemäße Vorrichtung in einem Schnitt dargestellt. Die Schnittebene bzw. die Bildebene entspricht dabei der Ebene des Folienvorhanges, durch den die Gegenstände 3 geschoben und durch die Folien 1, 2 umhüllt worden sind. Die Folien 1, 2 bestehen aus einem verschweißbaren Kunststoff. Die Folien 1,2 können ein einziges Folienstück sein. Sie können aber insbesondere auch aus zwei Teilen bestehen.

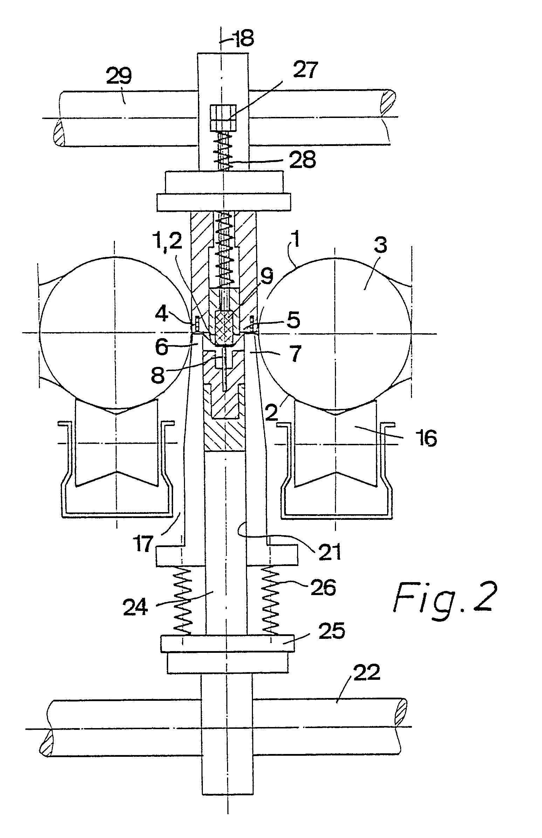

In den Fig. 1 und 2 sind zwei Gegenstände 3 gezeigt, die durch die gezeigte Vorrichtung voneinander getrennt werden sollen. Die Folien 1,2 können aber auch eine größere Zahl einzelner Gegenstände gemeinsam umhüllen. Die Gegenstände 3 in der Darstellung der Zeichnung besitzen eine zylindrische Gestalt. Es kann sich dabei um Dosen oder dergl. handeln.

Die Gegenstände 3 liegen mit ihrer Folie auf den Rollen 16 auf, zwischen denen eine Öffnung 17 besteht, durch die die unteren Klemmen 6 und 7 hindurchtreten können. Diese Klemmen 6 und 7 bilden zusammen eine Führung 21 für die Halterung 23 des Schweißstabes 8.

Die Halterung 23 stützt sich über die Stütze 24 auf dem Antrieb 22 ab, der durch einen Stange dargestellt ist. Die Einrichtungen zur Bewegung dieser Stange bzw. des Antriebs 22 sind nicht näher dargestellt.

Die Stützplatte 25 an der Stütze 24 bildet ein Widerlager für die Feder 26. Diese Federn 26 wirken auf die unteren Enden der Klemmen 6 und 7 ein, so daß diese Klemmen 6 und 7 bei einer Anhebbewegung des Antriebes 22 ebenso mitgenommen werden, wie der Schweißstab 8. Treffen jedoch die Klemmen 6 und 7 auf einen Widerstand, können sie wegen der Federn 26 gegenüber der Vorschubbewegung des Antriebes 26 zurückbleiben.

Über den Gegenständen 3, die von den Folien 1 und 2 umhüllt sind, ist die Schweißunterlage 9 angeordnet und kann mittels des Antriebes 29 bewegt werden, die als Stange dargestellt ist. Die Schweißunterlage 9 sitzt in einer Ausnehmung 14 der Halterung 12, die sich über eine Feder 10 an einem Widerlager 27 des Antriebes 29 abstützt.

Die Feder 10 umgibt eine Stange 28, die in das Widerlager 27 eintauchen kann.

Die Halterung 12 ist in der Führung 11 beweglich, die auf der Innenseite der Klemmen 4 und 5 angeordnet ist. Die Klemmen 4 und 5 sind starr mit dem Antrieb 29 verbunden. Die Vorderseite der Klemmen 4 und 5 trägt einen elastischen Einsatz bzw. eine Auflage 13 zur Verbesserung des Haltes der Folie beim Klemmvorgang.

Zur Durchführung einer Trennschweißung wird der Antrieb 29 nach unten und der Antrieb 22 nach oben bewegt. Beide Bewegungen können gleichzeitig erfolgen, es ist aber auch möglich, die Anhebbewegung des Antriebes 22 zeitlich etwas zu verzögern. Die Fig. 2 zeigt diejenige Stellung der Antriebe 29 und 22, in der die Klemme 4 mit der Klemme 6 zusammenwirkt, während die Klemmen 5 und 7 ebenfalls die Folien 1, 2 einklemmen. Bei der Vorschubbewegung des Antriebes 29 ist dabei die Schweißunterlage 9 entgegen der Wirkung der Feder 10 wegen der gespannten Folien 1 und 2 schon etwas zurückgedrückt, und die Halterung 12 wurde etwas in die Führung 11 zurückgeschoben. Die Schweißunterlage 9 steht jedoch deutlich über die Klemmen 4, 5 vor, so daß die Folien 1, 2 nach unten vorgewölbt werden.

Die Fig. 2 zeigt bezüglich des Antriebes 22 diejenige Stellung, in der die Klemmen 6 und 7 schon gegen die Kraft der Federn 26 etwas zurückgeschoben sind, und zwar soweit, daß der Schweißstab 8 gerade an den Folien 1, 2 zur Anlage kommt.

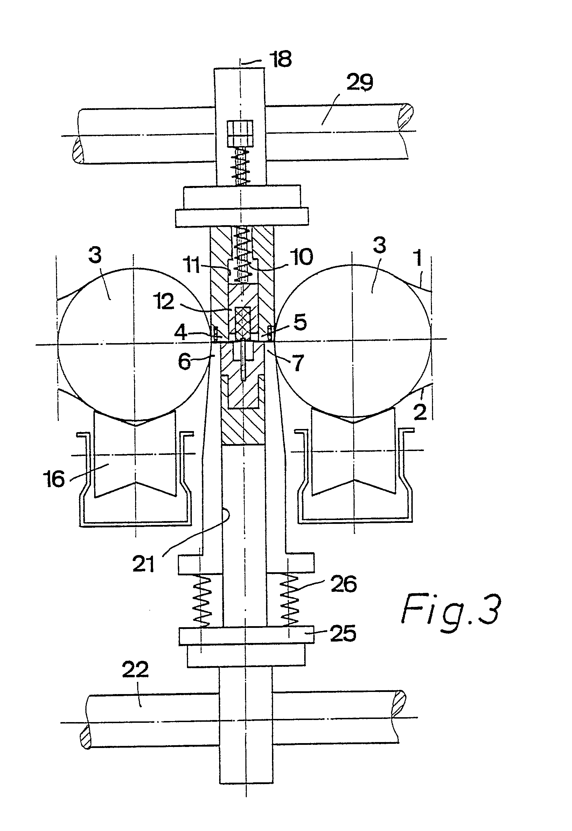

Die Stellung der Fig. 2 ist nur von kurzer Dauer bzw. nur ein Übergangsstadium. Durch weiteren Vorschub des Antriebes 22 drückt der heiße Schweißstab 8 die Schweißunterlage 9 gegen die Kraft der Feder 10 weiter zurück, so daß der Folienteil, der zwischen den Klemmenpaaren 4 und 6 bzw. 5 und 7 verläuft, entspannt wird. Diese Stellung ist in der Fig. 3 dargestellt. Es ist klar, daß bei diesem weiteren Vorschub des Antriebes 22 die Federn 26 weiter zusammengedrückt werden, da ein weiterer Vorschub der Klemmen 6 und 7 nicht möglich ist.

Gleichzeitig mit dem Zurückdrücken der Schweißunterlage 9 erfolgt die Trennschweißung der Folienteile 1, 2 zwischen den Klemmen 4 und 6 einerseits und 5 und 7 andererseits. Nach dem Trennschweißvorgang und einer angemessenen Abkühlung kann die Klemmung wieder gelöst werden.

Wenn der Schweißstab 8 über seine ganze Länge gleichförmig ausgebildet ist, ergibt sich eine völlige Trennschweißung. Die Folien 1,2 werden in der Ebene 18 durchgetrennt aber auch gleichzeitig miteinander verschweißt. In besonderen Fällen kann auch eine Schweißung allein angewandt werden. Nach der Lösung der Klemmen liegen die Folien 1,2 an den Gegenständen praktisch vollständig an.

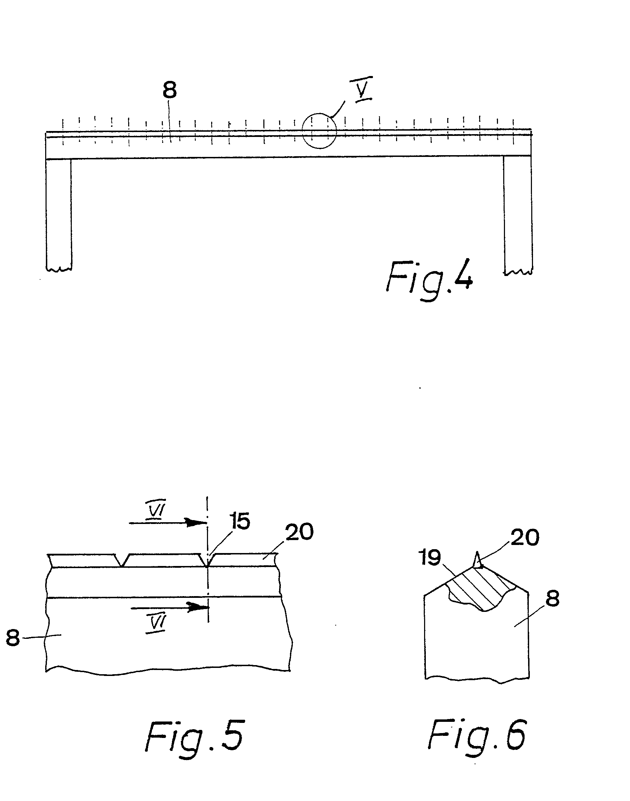

Wenn ein Schweißstab 8 benutzt wird, wie dies in den Fig. 4 bis 6 gezeigt ist, ergibt sich eine teilweise Trennschweißung. Die mit gleichförmigem Abstand angeordneten Einkerbungen 15 am Schweißstab 8 unterbrechen die Trennschweißung, so daß die einzelnen Gebinde noch an diesen Stellen zusammenhängen. Der Schweißstab 8 besitzt auf seiner Arbeitsseite eine dachartige Ausbildung 19 mit einer messerartigen Schweißkante 20. Die Schweißkante 20 kommt im wesentlichen allein mit den Folien 1,2 in Kontakt und drückt auch die Schweißunterlage 9 zurück.

## Ansprüche

1. Vorrichtung zum Verschweißen, insbesondere Trennschweißen von Folien (1,2), die unter Spannung einen oder mehrere Gegenstände (3) umschlingen, mit zwei gegeneinander beweglichen Klemmenpaaren (4 bis 7), zwischen denen ein beheizter Schweißstab (8) und eine Schweißunterlage (9) beweglich angeordnet sind, derart, daß die Folien (1,2) zwischen den Klemmenpaaren (4 bis 7) nach dem Klemmvorgang und vor dem Schweißvorgang gegen den Schweißstab (8) vorgewölbt sind, und der Schweißvorgang nach Zurückbewegung der Schweißunterlage (9) bei im wesentlichen entlasteten Folien erfolgt, dadurch gekennzeichnet, daß die Schweißunterlage (9) unter der Wirkung einer elastischen Vorschubkraft (10) steht, die groß genug ist, um die Folien (1,2) vorzuwölben, und wobei der Schweißstab (8) zu Beginn des Schweißvorgangs die Schweißunterlage (9) zurückdrückt.

2. Vorrichtung nach Anspruch 1, dadurch gekennzeichnet, daß die beiden Klemmen (4,5) auf der einen Folienseite untereinander verbunden und gemeinsam angetrieben sind, und daß die beiden Klemmen (4,5) zwischen sich eine Führung (11) und eine Halterung (12) für die Schweißunterlage (9) besitzen.

3. Vorrichtung nach Anspruch 2, dadurch gekennzeichnet, daß auch die beiden Klemmen (6,7) auf der Seite des Schweißstabes (8) untereinander verbunden und gemeinsam angetrieben sind.

4. Vorrichtung nach einem oder mehreren der vorhergehenden Ansprüche, dadurch gekennzeichnet, daß mindestens eine Klemme (4) eines Klemmenpaares (4, 6) eine elastische Auflage (13) besitzt.

5. Vorrichtung nach einem oder mehreren der vorhergehenden Ansprüche, dadurch gekennzeichnet, daß die beiden Klemmen (6, 7) auf der anderen Folienseite untereinander verbunden und gemeinsam angetrieben sind, und daß die beiden Klemmen (6, 7) zwischen sich eine Führung (21) für den Schweißstab (8) aufweisen.

6. Vorrichtung nach einem oder mehreren der vorhergehenden Ansprüche, dadurch gekennzeichnet, daß die Klemmen (6, 7) und der Schweißstab (8) einen gemeinsamen Antrieb (22) aufweisen und die Klemmen gegen die Wirkung einer Feder (26) oder dergleichen zurückdrückbar sind.

7. Vorrichtung nach einem oder mehreren der vorhergehenden Ansprüche, dadurch gekennzeichnet, daß die elastisch nachgiebige Schweißunterlage (9) in einer Ausnehmung (14) einer beweglichen Halterung (12) befestigt ist.

8. Vorrichtung nach einem oder mehreren der vorhergehenden Ansprüche, dadurch gekennzeichnet, daß der beheizte Schweißstab (8) eine Vielzahl von Einkerbungen (15) aufweist, die beim Trennschweißen Unterbruchstellen bilden, an denen die zu trennenden Folien (1,2) aneinander hängen.

9. Vorrichtung nach einem oder mehreren der vorhergehenden Ansprüche, dadurch gekennzeichnet, daß die Klemmenpaare (4 bis 7) mit den Schweißeinrichtungen (8,9) parallel zur Förderrichtung an einer Banderoliermaschine angeordnet sind, um durch gleichzeitige Umhüllung geschaffene Gebinde voneinander zu trennen.

Fig.1

Fig.2

Fig.3

8

$\widehat{V}$

Fig.4

$\widehat{VI}$

15

20

$\widehat{VI}$

8

Fig.5

20

19

8

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 397 917 (WELDOTRON CORP.)<br>* Seite 5, rechte Spalte, Zeilen 9-59; Ansprüche; Figuren 11-14 *<br>--- | 1-6,8,9 | B 29 C 65/74<br>B 29 C 65/02<br>B 29 C 65/18<br>B 65 B 51/30 //<br>B 29 L 7/00 |
| X | DE-B-1 479 549 (MASCHINENBAU AACHEN-FÜRSTENAU GmbH)<br>* Spalte 2, Zeile 46 - Spalte 3, Zeile 11; Ansprüche; Figuren 1-3 *<br>--- | 1-3,5-7 | |
| A | GB-A-1 090 575 (IMPERIAL CHEMICAL INDUSTRIES LTD)<br>* Seite 3, linke Spalte, Zeilen 16-41; Figuren 7-9 *<br>--- | 1-6 | |
| A | US-A-3 075 573 (T.E. PIAZZE)<br>* Spalte 5, Zeilen 7-15; Figuren 7,11,12 *<br>--- | 8 | |
| A,D | DE-A-1 903 515 (WELDOTRON CORP.)<br>----- | 1 | |

RECHERCHIERTE SACHGEBIETE (Int. Cl.4)

B 29 C
B 65 B

Der vorliegende Recherchenbericht wurde für alle Patentansprüche erstellt

| Recherchenort | Abschlußdatum der Recherche | Prüfer |
|---|---|---|
| DEN HAAG | 11-08-1989 | MOLTO PINOL F.J. |

EPO FORM 1503 03.82 (P0403)